# EUROPEAN PATENT SPECIFICATION

(11) **EP 2 884 362 B1**
(45) Date of publication and mention of the grant of the patent: **12.02.2020**
(21) Application number: 13197168.1
(22) Date of filing: 13.12.2013
(51) Int. Cl.: G05B 23/02

(54) **Method for running a working machine with fault control**
Verfahren zum Betrieb einer Arbeitsmaschine mit Fehlerkontrolle
Procédé de fonctionnement d'une machine de travail avec contrôle des défauts

(43) Date of publication of application: 17.06.2015
(73) Proprietor: ROBERT BOSCH GMBH, 70442 Stuttgart (DE)
(72) Inventor: Niessen, Hans, 6003 CC Weert (NL)
(74) Representative: Thürer, Andreas

(56) References cited:
- US-A1- 2006 143 547
- US-A1- 2010 017 167
- US-A1- 2010 161 141
- US-A1- 2011 160 900

## Description

The present invention is directed to a method for running a working machine and a working machine. Such working machines are known from the state of the art. Examples for these working machines are printing machines, beverage handling machines and the like. One issue about these machines is the handling of faults (in the following also referred to as errors). Usually, when a fault in a working-mode of those machines occurs, a user will have to find out the reason for this fault. This is sometimes a very time consuming procedure which will usually cause the working machine to stand still for a comparatively long time.

The US 2011160900 A1 discloses a substrate processing apparatus capable of checking a state of a transfer mechanism when an error occurs and determining a cause of the error is provided.

The US 2010161141 A1 describes an error logging method for a coating plant. The error logging method includes capturing an error during running of process data records for the coating plant, wherein the individual process data records are ordered according to the given time of operation of the coating plant.

It is therefore the object of the invention to provide a method and a device which reduces the time needed for finding the cause for a certain fault or error. This problem is solved by the objects of the independent claims. Advantages and embodiments are object of the subclaims.

In a method for running a working machine according to the invention the working machine comprises at least one drive device, which is controlled by a controlling device. According to the invention to at least one fault which may occur in a predefined mode, for example a working mode of the controlling device and/or the drive device at least one set of data is assigned, which can be output, if the fault occurs.

According to the invention, the at least one set of data is assigned before the fault occurs. According to the invention, the at least one set of data is assigned to the fault in a configuration or setup-mode for the working machine.

It is for example possible, that a number of user-definable variables (internal signals) are monitored and preferably continuously monitored and very preferably stored in a buffer during operation. If a fault arises, this buffer contains the history of the last couple of (milli-) seconds before the fault. From the moment the fault arises, the capturing of data is preferably stopped (possibly with a short delay to capture some result of the error).

For example a lists or a reference lists can be created, which for the respective fault or error or also a plurality of errors assigns specific sets of data. The data might be for example values or parameters, which might possibly be relevant for the specific error.

Preferably the data which are displayed are such data, in which the reason for the fault can be found with a high probability. The user is preferably free to select the data he likes to be displayed but is advised to search such data that are especially relevant for searching the reason of the fault.

It is therefore suggested that to an error situation a set of data or a data region is defined, about which content the user can be informed, if the fault or error occurs. By the invention the search for faults will be simplified. When therefore a fault or an error occurs a set of data for example a set of predefined variables is preferably available.

In general the data to be displayed depends on the fault or error. Preferably the data to be displayed contains setpoint-data and preferably setpoint-data which is selected from a group of setpoint data which contains setpoint positions, velocities, accelerations and the like. Also the data to be displayed may contain controller internals e.g. position errors, controller outputs, motor currents, voltages and the like.

If the data is selected with sufficient care, the reason for the fault can be found at once and especially without having to reproduce the error (which can be difficult, or harmful). For that reason, preferably at least some datasets are pre-defined.

According to a preferred embodiment of the invention to a plurality of faults which may occur in a mode of the machine, especially in a working- mode of the controlling device and/or the working machine at least one set of data is assigned, which can be output, if the fault occurs.

Preferably a collection of faults is stored and to each fault or error a certain set of data is assigned. Therefore, if in the working-mode a certain error or fault occurs, a specific set of data is selected which may be displayed to the user.

Preferably the set of data contains a plurality of variables. Therefore, in case that a certain fault occurs, a specific set of variables is assigned to this fault. These variables may be displayed to the user. The user then can react in reaction to this fault and may for example alter some of these variables to overcome the faulty condition.

In another preferred embodiment of the invention in a memory-device the data which are assigned to a fault are stored. This memory-device may be a permanent memory which is preferably located at the control-device and/or the working machine.

In another preferred embodiment to each fault a buffer with a pre-determined buffer-size is assigned. Therefore, this buffer-size may comprise a pre-defined amount of data before an error or fault arises. Therefore the buffers might have different buffer sizes depending on the respective errors they are assigned to.

In another preferred embodiment in reaction to an occurring fault the set of data is output to a user. The user may then for example compare the set of data with a reference set of data or may in another manner find out which variables might be changed to overcome the fault.

In another preferred embodiment the machine is selected from a group of machines which contains printing machines, copying machines, tool machines, processing machines, lifting machines, transport machines and the like.

In another preferred embodiment the data set is output in a dependence of time. Especially, at least one variable or more variables are output at a certain temporal scheme. So it is possible that the variables are not only output at a specific point in time, but are also output with a time-dependence. Also this time dependence might be relevant for finding out the fault. In another preferred embodiment however, at least some of the data are static values, for example static parameters. Preferably all of the data are static ie. time independent values.

In another preferred embodiment during a configuration-mode and/or before the working-mode or the usage of the machine for each fault which may arise a set of data is selected which may be displayed, if in a working-mode or another mode of the working machine the fault arises.

Preferably the data which are assigned and which are very preferably displayed are such data in which a reason for the fault can be found with a high possibility. Therefore, those data are assigned which are with a high probability responsible for a fault which arises.

In another preferred embodiment also the depth of a data region may be determined. In other words also the depth of the data region which may be analyzed can be determined especially in a configuration-mode of the machines.

In another embodiment the machine comprises at least two drive devices and preferably several drive devices which are all controlled by respective controlling devices. Furthermore, one or more master controls may be provided which control the respective controlling devices.

Preferably the machine comprises a memory device in which for every possible arising fault or error a certain amount of data is stored. Also the connection between the respective faults and the data to be displayed may be stored in the memory device.

The present invention is also directed to a working machine which comprises at least one drive device form moving at least one working element. Moreover, the working machine comprises a working device for controlling the drive device, wherein the controlling device controls the drive device based on determined controlling data.

According to the invention the working machine comprises an outputting device which in case of the occurrence of a fault outputs a pre-determined set of data which has been assigned to this fault.

Therefore, also for the machine according to the invention it is suggested that an outputting device displays the user sets of data or data which might be responsible for a fault.

In another further embodiment also the faults occurring during a working-mode are stored. For example also the time, at which such a fault occurred, can be recorded.

In another preferred embodiment the working machine has a detection device for detecting faults in a working-mode of the controlling device and/or the working machine. This detection device might be a detection device which controls or determines physical parameters as for example currents or voltages and the like. However, the detection device also may be a program for which it is possible, that an unusual flow of the program is detected and assigned to a fault.

In another preferred embodiment the working machine comprises a storage device or a memory device which is provided for storing sets of data which are assigned to specific faults. It is possible, that this memory device continuously collects the user-defined data. Preferably at any error, this data can be viewed by the user. Very preferably a user can select for which error (or class of errors - depending on the severity) he likes to see the data.

Preferably the working machine is a semiconductor processing machine. Preferably the working machine is directed and intended to fabricate integrated circuits.

It is possible that the data to be displayed are time-independent. However, it would also be possible, that data with a certain time dependence are output and/or especially that the data are output with this time dependence. For example it would be possible, that a graphic is displayed or output, which shows the temporal evolvement of certain data.

Other advantages or embodiments of the invention will be become apparent from the attached drawings.
- Fig. 1: A schematic view of a working machine according to the invention;
- Fig. 2: an illustration of a reaction to faults which may arise; and
- Fig. 3: a flowchart explaining the invention.

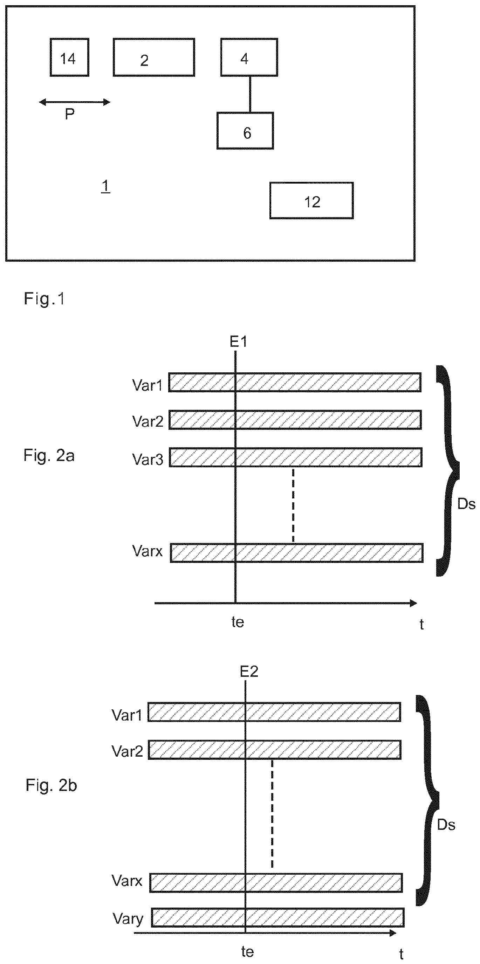

Fig. 1 shows a schematic view of a working machine 1 according to the invention. This working machine 1 comprises at least one working element 14 which may be moved in a predetermined direction, here in a linear direction P. However also other movements as for example circular movements would be possible. This movement of the working element 14 is caused by a drive device 2. This drive device is a drive device which may be selected from a group of drive devices which comprises electric devices especially electric motors, pneumatic drive devices, hydraulic drive devices and the like.

Reference symbol 4 is directed to a controlling device which controls the drive device and therefore also the movement of the working element 14.

Reference numeral 6 refers to a storing device or memory in which specific variables which are assigned to specific possible occurring faults, especially during the working-modes are stored. Reference numeral 12 is directed to a display device by which in cause of an occurring fault a specific data set may be displayed.

Figures 2a and 2b illustrate a working-mode of the machine. Here the horizontal axis is directed to the time, especially the time in which a working-mode of the machine is running. The reference symbols E1 and E2 refer to errors or faults which occur at a point in time te.

If this error or fault occurs, in case of fig. 2a a certain set of data DS is displayed to the user. In this case, for example, the variables Var1, Var 2, Var3, ... VarX may be displayed to the user.

Fig. 2b corresponds to the occurrence of an error E2. In this case to the users another set of data DS is displayed, here for example the variables Var1, Var2, VarX and VarY. In this way for all possible errors arising a specific data set may be displayed, wherein the different data sets at least differ in parts in dependence of the errors E1, E2 they are assigned to. Preferably to each possible error a specific set of data is assigned which set of data contains different variables which preferably differ from the set of data which is assigned to another possible error.

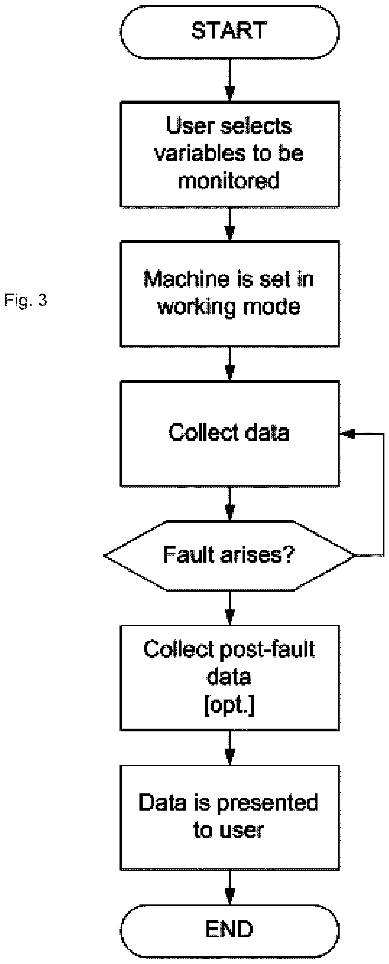

Fig. 3 shows a flowchart explaining the invention. In a first step or even before a running mode of the machine a user selects and/or defines the variables to be monitored. For chos-ing this variables, the user may get instructions from the systems, for example the relevance of certain parameters for different faults of the machine. After this selection is made, the machine is brought into its workmode.

During this workmode data are collected. Preferably the data are collected continuously. If a fault arises, the data which have been collected before the fault are determined. Optionally it is also possible to collect data which arose after the fault. The data collected (directly) before the fault (and optionally also the data collected after the fault) are displayed to the user. Upon this data the user can easier determine the source of the fault.

### List of reference numerals

- 1: working machine
- 2: drive device
- 4: controlling device
- 6: storing device/memory device
- 12: display device
- 14: working element
- Var1..Vary: Variables
- DS: set of data
- P: moving direction of working element
- E1, E2: fault/error
- t: time
- te: time of occuring fault/error

## Claims

1. Method for running a working machine (1), wherein the working machine comprises at least one drive device (2) which is controlled by a controlling device (4), wherein to at least one fault (E1, E2), which may occur in a working mode of the controlling device (4) and/or the drive device (2) and/or the working machine, at least one set of data (DS) is assigned, which is output, if the fault occurs and is assigned before the fault occurs
**characterized in that**
the set of data is assigned to the fault in a configuration or setup-mode for the working machine.

2. Method according to claim 1, **characterized in that** to a plurality of faults (E1, E2), which may occur in a working mode of the controlling device (4), at least one set of data (DS) is assigned.

3. Method according to claim 1, **characterized in that** the set of data (DS) contains a plurality of variables (Var1, Var2, Vary).

4. Method according to at least one of the preceding claims, **characterized in that** the data, which is assigned to a fault (E1, E2), is stored in a memory device (6).

5. Method according to at least one of the preceding claims, **characterized in that** to each fault (E1, E2) a buffer with a predetermined buffer size is assigned.

6. Method according to at least one of the preceding claims, **characterized in that** in reaction to an occurring fault (E1, E2) the set of data (DS) is provided to a user.

7. Method according to at least one of the preceding claims, **characterized in that** the machine (1) is selected from a group of machines which contain printing machines, copying machines, tool machines, processing machines, lifting machines, transport machines and the like.

8. Method according to at least one of the preceding claims, **characterized in that** the data set (DS) provided in dependence of time.

9. Working machine (1) with at least one drive device (2) for moving at least one working element (14), with a controlling device (4) for controlling the drive device (2), the controlling (4) device being adapted to control the drive device (2) based on predetermined control data, wherein the working machine (1) comprises an output device (12), which is adapted, in case of the occurrence of a fault (E1, E2), to provide a predetermined set of data (DS), which has been assigned to this fault (E1, E2), which can be output, if the fault occurs and is assigned before the fault occurs
**characterized in that** the working machine is adapted to provide a configuration or setup-mode wherein the set of data can be assigned.

10. Working machine (1) according to claim 9, wherein the working machine (1) has a detection device for detecting faults, especially in the working mode of the controlling device (4).

11. Working machine (1) according to claim 9, wherein the working machine (1) comprises a storage device (6) which is provided for storing sets of data (DS) which are assigned to specific faults (E1, E2).

## Patentansprüche

1. Verfahren zum Betreiben einer Arbeitsmaschine (1), wobei die Arbeitsmaschine wenigstens eine Antriebsvorrichtung (2) umfasst, die von einer Steuerungsvorrichtung (4) gesteuert wird, wobei wenigstens einer Störung (E1, E2), die in einem Arbeitsmodus der Steuerungsvorrichtung (4) und/oder der Antriebsvorrichtung (2) und/oder der Arbeitsmaschine auftreten kann, wenigstens ein Satz Daten (DS) zugeordnet ist, die ausgegeben werden, wenn die Störung auftritt, und zugewiesen werden, bevor die Störung auftritt,
**dadurch gekennzeichnet, dass**
der Satz Daten der Störung in einem Konfigurations- oder Einrichtungsmodus für die Arbeitsmaschine zugewiesen wird.

2. Verfahren gemäß Anspruch 1, **dadurch gekennzeichnet, dass** mehreren Störungen (E1, E2), die in einem Arbeitsmodus der Steuerungsvorrichtung (4) auftreten können, wenigstens ein Satz Daten (DS) zugewiesen wird.

3. Verfahren gemäß Anspruch 1, **dadurch gekennzeichnet, dass** der Satz Daten (DS) mehrere Variablen (Var1, Var2, Vary) enthält.

4. Verfahren gemäß wenigstens einem der vorstehenden Ansprüche, **dadurch gekennzeichnet, dass** die Daten, die einer Störung (E1, E2) zugewiesen werden, in einer Speichervorrichtung (6) gespeichert sind.

5. Verfahren gemäß wenigstens einem der vorstehenden Ansprüche, **dadurch gekennzeichnet, dass** jeder Störung (E1, E2) ein Puffer mit vorbestimmter Puffergröße zugewiesen wird.

6. Verfahren gemäß wenigstens einem der vorstehenden Ansprüche, **dadurch gekennzeichnet, dass** in Reaktion auf eine auftretende Störung (E1, E2) der Satz Daten (DS) einem Benutzer bereitgestellt wird.

7. Verfahren gemäß wenigstens einem der vorstehenden Ansprüche, **dadurch gekennzeichnet, dass** die Maschine (1) aus einer Gruppe von Maschinen ausgewählt ist, die Druckmaschinen, Kopiermaschinen, Werkzeugmaschinen, Verarbeitungsmaschinen, Hebemaschinen, Transportmaschinen und dergleichen enthält.

8. Verfahren gemäß wenigstens einem der vorstehenden Ansprüche, **dadurch gekennzeichnet, dass** der Satz Daten (DS) in Abhängigkeit von der Zeit bereitgestellt wird.

9. Arbeitsmaschine (1) mit wenigstens einer Antriebsvorrichtung (2) zum Bewegen wenigstens eines Arbeitselements (14) mit einer Steuerungsvorrichtung (4) zum Steuern der Antriebsvorrichtung (2), wobei die Steuerungsvorrichtung (4) dafür ausgelegt ist, die Antriebsvorrichtung (2) basierend auf vorbestimmten Steuerungsdaten zu steuern, wobei die Arbeitsmaschine (1) eine Ausgabevorrichtung (12) umfasst, die dafür ausgelegt ist, im Fall des Auftretens einer Störung (E1, E2) einen vorbestimmten Satz Daten (DS), der dieser Störung (E1, E2) zugewiesen wurde, bereitzustellen, der ausgegeben werden kann, wenn die Störung auftritt, und zugewiesen wird, bevor die Störung auftritt,
**dadurch gekennzeichnet, dass**
die Arbeitsmaschine dafür ausgelegt ist, einen Konfigurations- oder Einrichtungsmodus bereitzustellen, in dem der Satz Daten zugewiesen werden kann.

10. Arbeitsmaschine (1) gemäß Anspruch 9, wobei die Arbeitsmaschine (1) eine Erkennungsvorrichtung zum Erkennen von Störungen, insbesondere im Arbeitsmodus der Steuerungsvorrichtung (4), aufweist.

11. Arbeitsmaschine (1) gemäß Anspruch 9, wobei die Arbeitsmaschine (1) eine Speichervorrichtung (6) umfasst, die zum Speichern der Sätze Daten (DS), welche bestimmten Störungen (E1, E2) zugewiesen sind, vorgesehen ist.

## Revendications

1. Procédé d'exploitation d'une machine de travail (1), dans lequel la machine de travail comprend au moins un dispositif d'entraînement (2) qui est commandé par un dispositif de commande (4), dans lequel au moins un défaut (E1, E2) pouvant se produire dans un mode de travail du dispositif de commande (4) et/ou du dispositif d'entraînement (2) et/ou de la machine de travail se voit attribuer au moins un ensemble de données (DS) qui est sorti si le défaut se produit et est attribué avant que le défaut ne se produise,
**caractérisé en ce que** l'ensemble de données est attribué au défaut dans un mode de configuration ou de paramétrage pour la machine de travail.

2. Procédé selon la revendication 1, **caractérisé en ce qu'**une pluralité de défauts (E1, E2) pouvant se produire dans un mode de travail du dispositif de commande (4) se voit attribuer au moins un ensemble de données (DS).

3. Procédé selon la revendication 1, **caractérisé en ce que** l'ensemble de données (DS) contient une pluralité de variables (Var1, Var2, Vary).

4. Procédé selon au moins l'une des revendications précédentes, **caractérisé en ce que** les données qui sont attribuées à un défaut (E1, E2) sont stockées dans un dispositif de mémoire (6).

5. Procédé selon au moins l'une des revendications précédentes, **caractérisé en ce que** chaque défaut (E1, E2) se voit attribuer une mémoire tampon avec une dimension de mémoire tampon prédéterminée.

6. Procédé selon au moins l'une des revendications précédentes, **caractérisé en ce qu'**en réaction à un défaut (E1, E2) qui se produit, l'ensemble de données (DS) est fourni à un utilisateur.

7. Procédé selon au moins l'une des revendications précédentes, **caractérisé en ce que** la machine (1) est sélectionnée dans un groupe de machines qui comprend des machines à imprimer, des machines à copier, des machines-outils, des machines de traitement, des machines de levage, des machines de transport et similaires.

8. Procédé selon au moins l'une des revendications précédentes, **caractérisé en ce que** l'ensemble de données (DS) est fourni en fonction du temps.

9. Machine de travail (1) avec au moins un dispositif d'entraînement (2) pour déplacer au moins un élément de travail (14), avec un dispositif de commande (4) pour commander le dispositif d'entraînement (2), le dispositif de commande (4) étant adapté pour commander le dispositif d'entraînement (2) sur la base de données de commande prédéterminées, dans laquelle la machine de travail (1) comprend un dispositif de sortie (12) qui est adapté, au cas où un défaut (E1, E2) se produit, pour fournir un ensemble de données prédéterminé (DS) qui a été attribué à ce défaut (E1, E2), qui peut être sorti, si le défaut se produit et est attribué avant que le défaut ne se produise,
**caractérisée en ce que** la machine de travail est adaptée pour fournir un mode de configuration ou de paramétrage dans lequel l'ensemble de données peut être attribué.

10. Machine de travail (1) selon la revendication 9, dans laquelle la machine de travail (1) présente un dispositif de détection pour détecter des défauts, en particulier dans le mode de travail du dispositif de commande (4).

11. Machine de travail (1) selon la revendication 9, dans laquelle la machine de travail (1) comprend un dispositif de stockage (6) qui est prévu pour stocker des ensembles de données (DS) qui sont attribués à des défauts spécifiques (E1, E2).
